# EUROPÄISCHE PATENTANMELDUNG

(11) **EP 4 616 762 A1**
(43) Veröffentlichungstag der Anmeldung: **17.09.2025**
(21) Anmeldenummer: 25161304.8
(22) Anmeldetag: 03.03.2025
(51) Int. Cl.: A47B 96/14

(54) **TRAVERSE FÜR EIN REGAL MIT AUFNAHMEELEMENTEN FÜR PANEELE**

(30) Priorität: 12.03.2024 DE 102024107067
(71) Anmelder: BITO-Lagertechnik Bittmann GmbH, 55590 Meisenheim (DE)
(72) Erfinder: MARTINI, Dennis Jürgen, 55568 Staudernheim (DE)
(74) Vertreter: Richardt Patentanwälte PartG mbB

(57) **Zusammenfassung**

Die Erfindung betrifft eine Traverse (1) für ein Regal zum Tragen zumindest eines Paneels (2) des Regals , wobei die Traverse (1) eine zur Längsachse (3) der Traverse (1) parallel verlaufende Seitenfläche (4) und zumindest ein Aufnahmeelement (5) zum Befestigen des Paneels aufweist und das Aufnahmeelement (5) an der Seitenfläche (4) angeordnet ist und einen Abschnitt (6) aufweist, der einen Abstand (7) zu der Seitenfläche (4) aufweist und sich bis zu einem frei stehenden Ende (8) des Aufnahmeelementes (5) erstreckt, und das Aufnahmeelement (5) aus einem Material der Traverse (1) herausgeformt ist.

## Beschreibung

Die Erfindung betrifft eine Traverse für ein Regal sowie ein Regal mit einer Traverse und zumindest einem Paneel.

Aus dem Stand der Technik sind viele Arten von Regalen bekannt. Beispielsweise offenbart die Europäische Patentanmeldung EP 0273345 A2 ein Regal, insbesondere ein Paneelregal, mit zwischen aufrechten Regalpfosten eingehängten und/oder befestigten Längs- und/oder Quertraversen als Trageelemente.

Die WO 00/27733 A1 offenbart ein Regal mit Paneelen, wobei die Paneele in Aussparungen von Traversen eingesetzt werden können. Hierbei greifen Klauen der Traversen in seitliche Aussparungen der Paneele ein. Die WO 201010/022448 A1 offenbart ein Regalsystem mit Paneelen, welche von oben in Aussparungen von Traversen eingesetzt werden können.

In der EP 2 392 230 B1 wird ein Regal mit einem Regalpaneel beschrieben, welches einen waagerechten und zwei senkrechte Schenkel aufweist, wobei der waagerechte Schenkel eine Aussparung aufweist, wobei sich die Aussparung in Erstreckungsrichtung des Paneels vollständig bis zum Ende der senkrechten Schenkel des Paneels erstreckt, wobei am Rand der Aussparung der waagerechte Schenkel von dem Ende des Paneels wegweisend in Richtung des Bereichs zwischen den senkrechten Schenkeln geneigt ist.

In der US 5310066A wird ein Kragarmregal mit Stützsäulen, Traversen und Paneelen beschrieben. An den Stützsäulen sind eine hintere und eine vordere Traverse montiert, wobei die vorderen Traversen Halterungen für die Paneelen aufweisen. Die Halterungen sind U-förmig aus einem Material der vorderen Traversen gebildet ist.

Der Erfindung liegt die Aufgabe zugrunde, eine Traverse für ein Regal und ein Regal mit einer Traverse bereitzustellen. Die der Erfindung zugrunde liegenden Aufgaben werden mit den Merkmalen des unabhängigen Patentanspruches gelöst. Bevorzugte Ausführungsformen der Erfindung sind in den abhängigen Patentansprüchen angegeben.

Es wird eine Traverse für ein Regal zum Tragen zumindest eines Paneels des Regals vorgeschlagen. Die Traverse weist eine zur Längsachse der Traverse parallel verlaufende Seitenfläche und zumindest ein Aufnahmeelement zum Befestigen des Paneels auf. Das Aufnahmeelement ist an der Seitenfläche angeordnet und weist einen Abschnitt auf. Der Abschnitt weist einen Abstand zu der Seitenfläche auf und erstreckt sich bis zu einem frei stehenden Ende des Aufnahmeelementes. Der Abschnitt kann parallel oder schräg zu der Seitenfläche verlaufen. Weiterhin ist das Aufnahmeelement aus einem Material der Traverse herausgeformt.

In einem in dem Regal verbauten Zustand der Traverse verläuft die Längsachse der Traverse z.B. in einer horizontalen ersten Ebene des Regals, wobei die Seitenfläche der Traverse bevorzugt senkrecht zu der ersten Ebene verläuft. Dadurch, dass der Abschnitt des Aufnahmeelementes den Abstand zu der Seitenfläche aufweist, ergibt sich ein Raum zum Einführen eines Befestigungselementes des Paneels zum Befestigen des Paneels an dem Aufnahmeelement. Das Befestigungselement kann hierbei von oben nach unten in vertikaler Richtung in den Raum zwischen dem Aufnahmeelement und der Seitenfläche eingeführt werden. Erfindungsgemäß ist das Aufnahmeelement aus dem Material der Traverse herausgeformt. Ein Herausformen des Aufnahmeelementes aus dem Material der Traverse kann beispielsweise durch ein Pressen, insbesondere Stanzen, umgesetzt werden.

Herausformen ist in diesem Fall insbesondere so zu verstehen, dass das Aufnahmeelement vor dem Herausformen Teil der Seitenfläche war. Das Material der Traverse entspricht damit dem Material des Aufnahmeelements und das Aufnahmeelement ist noch teilweise mit der Traverse verbunden. Möglich ist z.B, dass das Aufnahmeelement durch einen mechanischen Prozess aus der Seitenfläche der Traverse herausgebogen und z.B. dadurch teilweise von der Seitenfläche abgetrennt wurde.

Dadurch, dass das Aufnahmeelement aus dem Material der Traverse herausgeformt ist, muss das Aufnahmeelement nicht mit Hilfe zusätzlicher Befestigungsmittel an der Seitenfläche montiert werden. Dadurch kann zum einen Material und zum anderen ein Montageschritt, nämlich ein Montieren des Aufnahmeelementes an der Seitenfläche, eingespart werden. Durch das frei stehende Ende des Aufnahmeelementes kann ein Verziehen des Materials der Traverse an der Seitenfläche beim Herausformen reduziert werden. Insbesondere kann das frei stehende Ende etwaige Spannungsspitzen, die in dem Material der Traverse als Resultat des Herausformens entstehen können, reduzieren. Das Risiko einer etwaigen Materialschwächung wird dadurch minimiert und die Gesamtstabilität der Traverse kann maximiert werden.

In einer vorteilhaften Ausgestaltung weist das Aufnahmeelement eine in zur Längsachse im Wesentlichen senkrechte Richtung verlaufende und nach oben offene Aussparung zum Aufnehmen des Paneels in der senkrechten Richtung auf. Die nach oben offene Aussparung ermöglicht es, einen im montierten Zustand des Paneels nach unten gerichteten Schenkel des Paneels derart in die Aussparung aufzunehmen, dass ein Ende des Paneels mit dem Aufnahmeelement in Eingriff kommt. Insbesondere können Kanten der Aussparung eine Bewegung des Paneels blockieren, wenn das Paneel in das Aufnahmeelement eingesetzt ist. Das Paneel kann in diesem Fall nicht mehr seitlich "verrutschen", das heißt in Richtung der Längsachse der Traverse.

Gemäß einer Weiterbildung ist vorgesehen, dass an der Seitenfläche zwei der Aufnahmeelemente angeordnet sind, wobei die frei stehenden Enden der beiden Aufnahmeelemente in einer zweiten Ebene liegen, die parallel zu der Seitenfläche verläuft. Die frei stehenden Enden der beiden Aufnahmeelemente weisen innerhalb der zweiten Ebene einen Abstand zueinander auf. Dadurch, dass die beiden Aufnahmeelemente innerhalb der zweiten Ebene liegen, kann das Ende des Paneels in beide Aufnahmeelemente gleichzeitig eingesetzt werden. Die beiden Aufnahmeelemente sorgen für eine sicherere Befestigung des Endes des Paneels an der Traverse im Vergleich zu einer Befestigung des Endes mit nur einem Aufnahmeelement. Insbesondere können die beiden Aufnahmeelemente zusammen eine Bewegung des Paneels blockieren und das Risiko eines Verkippens des Paneels um dessen Längsachse im Fall ungünstiger Belastung minimieren.

Das Paneel kann noch sicherer an den beiden Aufnahmeelementen befestigt werden, wenn die beiden Aufnahmeelemente jeweils die Aussparung aufweisen. Das Paneel, insbesondere das Ende des Paneels, welches an der Traverse befestigt werden soll, weist vorteilhafterweise hierbei einen U-förmigen Querschnitt auf. Der U-förmige Querschnitt ist durch zwei im eingebauten Zustand des Paneels nach unten gerichtete Schenkel und einen waagerechten Schenkel, der die beiden nach unten gerichteten Schenkel verbindet, ausgebildet. Die beiden nach unten gerichteten Schenkel können beim Befestigen des Paneels an der Traverse in die beiden Aussparungen eingesetzt werden bzw. von diesen aufgenommen werden.

Eine besonders vorteilhafte Ausgestaltung sieht vor, dass die Aussparungen der beiden Aufnahmeelemente jeweils zueinander gewandte Kanten aufweisen und diese Kanten zueinander geneigt sind. Dadurch können die Schenkel des U-förmigen Endes des Paneels beim Einsetzen des Paneels in die Aussparungen zusammen- oder auseinandergedrückt werden, wodurch sich ein Anpressdruck zwischen den Kanten und den nach unten gerichteten Schenkeln ergibt. Dieser Anpressdruck kann einen sicheren Halt des Endes des Paneels in den Aussparungen erzeugen. Vorteilhafterweise sind die Kanten der Aussparungen derart ausgebildet, dass diese im unteren Bereich der Aussparungen eine jeweilige Rastnase ausbilden, in welcher eine jeweilige Aussparung des nach unten gerichteten Schenkels des Paneels einrasten kann.

Nach einer weiteren Ausgestaltung weist die Traverse einen Durchbruch (sozusagen ein Loch) auf, der durch das Herausformen des Aufnahmeelementes aus dem Material der Traverse gebildet ist. Dadurch, dass aufgrund des Herausformens des Aufnahmeelementes der Durchbruch vorhanden ist, weist die Traverse oberhalb des Durchbruches einen Gurt auf, der eine Stabilität der Traverse in einem Bereich um das Aufnahmeelement herum erhöht. Diese Ausgestaltung stellt insbesondere eine Verbesserung gegenüber einer Variante dar, bei welcher das Paneel in eine Aussparung, die direkt von oben in die Seitenfläche eingearbeitet ist, eingeschoben wird. Der nun bei der vorgeschlagenen Traverse durch das Herausformen des Aufnahmeelementes entstehende Gurt reduziert eine Verformung der Traverse, wenn das Paneel im eingebauten Zustand belastet wird.

In einer weiteren Ausführungsform sind an der Seitenfläche zwei der Aufnahmeelemente angeordnet (insbesondere wie obig beschrieben), wobei die Traverse zwei der Durchbrüche aufweist. Die beiden Durchbrüche weisen einen Abstand zueinander auf, sodass ein Steg zwischen den Durchbrüchen gebildet ist. Der Steg stabilisiert insbesondere den über dem Steg verlaufenden Gurt der Traverse. Dies kann weiter die Stabilität der Traverse erhöhen.

In einer besonderen Ausgestaltung weist die Traverse zumindest einen Eckbereich auf, an welchem eine Seitenkante des Aufnahmeelements an die Seitenfläche unmittelbar angrenzt und ab welchem das Aufnahmeelement aus dem Material der Traverse bzw. der Seitenfläche herausgeformt ist (man könnte auch sagen, an welchem bzw über welchen das Aufnahmeelement mit der Seitenfläche verbunden ist). Die Traverse weist bei dieser Ausgestaltung im Eckbereich zusätzlich zu der aus der Herausformung resultierenden Aussparung der Seitenfläche, d.h. zusätzlich zu dem Durchbruch, eine Entlastungsaussparung auf. Die Seitenkante des Aufnahmeelementes führt insbesondere von dem frei stehenden Ende hin zu der Seitenfläche, wobei die Seitenkante auf die Seitenfläche stößt. Insbesondere beginnt das Aufnahmeelement, insbesondere die Seitenkante, in dem Eckbereich.

Als Eckbereich wird insbesondere eine Zone um den Beginn der Seitenkante verstanden, die auch Teile der Seitenfläche umfasst, die einen Abstand zu der Seitenkante aufweisen. Die Entlastungsaussparung kann insbesondere eine Kerbwirkung, die bei einer vertikal wirkenden Last auf das Aufnahmeelement entstehen kann, reduzieren. Des Weiteren kann die Entlastungsaussparung Kerbspannungen, die bei dem Herausformen des Aufnahmeelementes aus dem Material der Traverse entstehen können, reduzieren.

Gemäß einer möglichen Ausgestaltung kann die Entlastungsaussparung eine runde Form aufweisen. Im einfachen Fall ist die Entlastungsaussparung in Form einer Bohrung ausgebildet. In einer weiteren Ausgestaltung kann die Entlastungsaussparung in einem Querschnitt, der parallel zu der Seitenfläche verläuft, eine Löffelform mit einem länglichen Schlitz und einem an den Schlitz angrenzenden runden Ende aufweisen. Der Schlitz grenzt bei dieser Ausgestaltung an den Eckbereich an und erstreckt sich weg von dem Eckbereich und dem frei stehenden Ende des Aufnahmeelementes. Der längliche Schlitz bewirkt, dass eine Entstehung einer Kerbe beim Herausformen, die im Normalfall beim Herausformen des Aufnahmeelementes extrem hohe Spannungen verursachen kann, vermieden werden kann. Die Entlastungsaussparung wird vorteilhafterweise vor dem Herausformen erzeugt. Bevorzugt wird die Entlastungsaussparung durch Stanzen mit einem Werkzeug, das die Querschnittsform der Entlastungsaussparung aufweist, in die Traverse eingearbeitet.

Des Weiteren wird ein Regal mit einer Traverse und zumindest einem Paneel vorgeschlagen. Die Traverse kann nach einer der oben genannten Varianten ausgebildet sein. Zumindest weist die Traverse eine zur Längsachse der Traverse parallel verlaufende Seitenfläche und zumindest ein Aufnahmeelement zum Befestigen des Paneels auf. Das Aufnahmeelement ist an der Seitenfläche angeordnet und weist einen Abschnitt auf. Der Abschnitt weist einen Abstand zu der Seitenfläche auf und erstreckt sich bis zu einem frei stehenden Ende des Aufnahmeelementes. Weiterhin ist das Aufnahmeelement aus einem Material der Traverse herausgeformt.

Ausführungsbeispiele der vorgeschlagenen Traverse werden anhand der folgenden Figuren näher erläutert. Dabei zeigt schematisch:
- Figur 1: ein Regal mit einer Traverse und Paneelen;
- Figur 2: eine erste perspektivische Ansicht der in Fig. 1 gezeigten Traverse mit zwei Aufnahmeelementen zum Befestigen eines Panels des Regals;
- Figur 3: eine Draufsicht einer Seitenwand der in Fig. 1 gezeigten Traverse;
- Figur 4: eine perspektivische Ansicht der beiden in Fig. 2 gezeigten Aufnahmeelemente;
- Figur 5: eine Variante des in Fig. 1 dargestellten Panels;
- Figur 6: eine weitere mögliche Anordnung der beiden in Fig. 2 gezeigten Aufnahmeelemente zueinander;
- Figur 7: die in Fig. 1 gezeigte Traverse mit zusätzlichen zu den in Fig. 3 und Fig. 4 gezeigten Aufnahmeelementen.

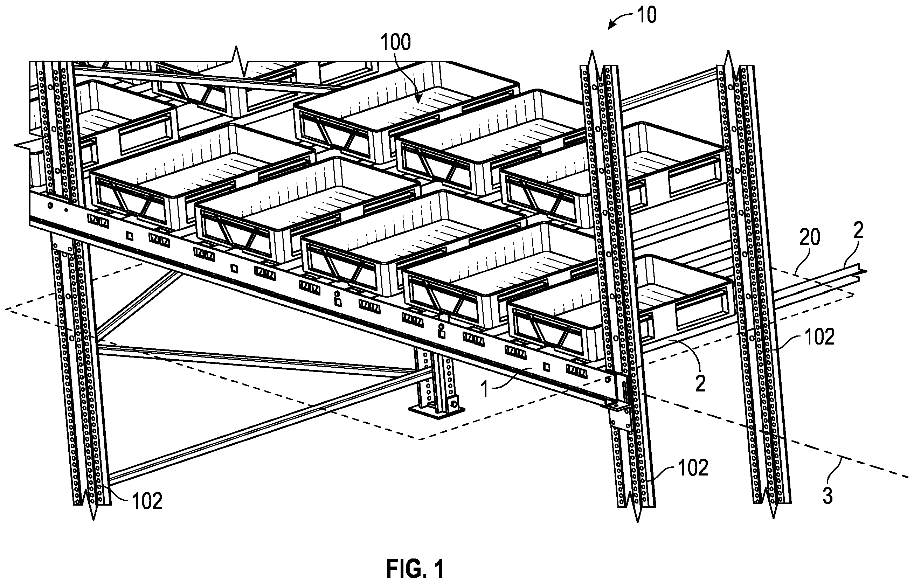

Fig. 1 zeigt ein Regal 10 mit einer Traverse 1. Die Traverse 1 weist eine Längsachse 3 auf, die parallel zu einer ersten Ebene 20 verläuft. Das Regal 10 weist zumindest noch eine weitere Traverse auf, die der Übersicht halber nicht in Fig. 1 dargestellt ist. Die weitere Traverse ist innerhalb der Ebene 20 gegenüber von der Traverse 1 angeordnet und verläuft parallel zu der Traverse 1. Parallel zu der ersten Ebene 20 verlaufende Paneele, darunter ein Paneel 2, sind an der Traverse 1 und an der weiteren Traverse befestigt. Die Traverse 1, bevorzugt auch die weitere Traverse, ist an vertikalen Regalstützen 102 des Regals 10 befestigt. Wie aus Fig. 1 ersichtlich, verlaufen die Paneele, insbesondere das Paneel 2, senkrecht zu der Traverse 1 innerhalb der ersten Ebene 20. Mithilfe des Regals 10 können beispielsweise mehrere Behälter 100 gelagert werden.

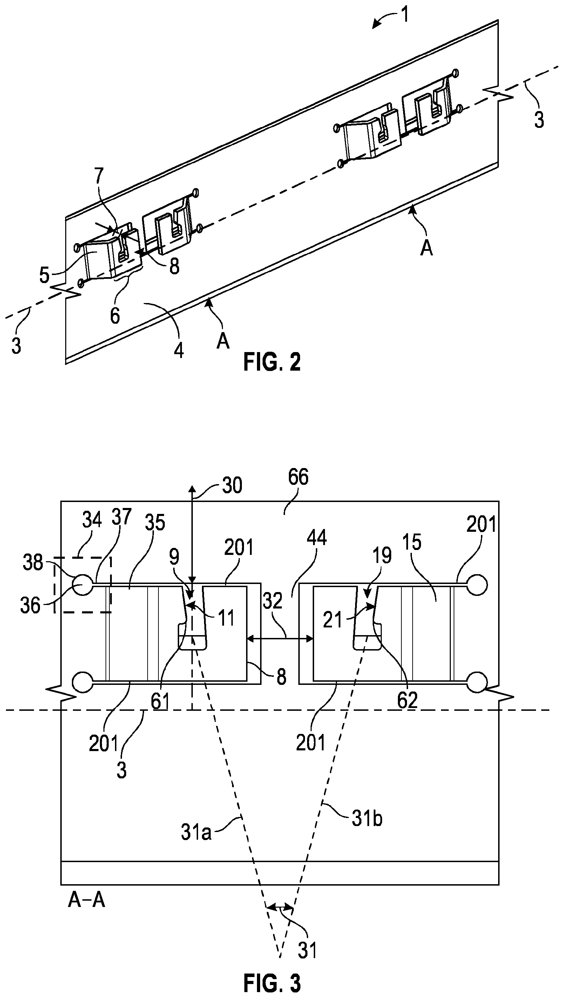

Fig. 2 zeigt eine perspektivische Ansicht der Traverse 1. Die Traverse 1 weist eine zu der Längsachse 3 parallel verlaufende Seitenfläche 4 und zumindest ein Aufnahmeelement 5 zum Befestigen des Paneels 2 auf. Das Aufnahmeelement 5 ist an der Seitenfläche 4 angeordnet und weist einen Abschnitt 6 auf. Der Abschnitt 6 weist einen ersten Abstand 7 zu der Seitenfläche 4 auf und erstreckt sich bis zu einem frei stehenden Ende 8 des Aufnahmeelementes 5. Bei der in Fig. 2 gezeigten Variante verläuft der Abschnitt 6 parallel zu der Seitenfläche 4. Der erste Abstand 7 kann beispielsweise 5 bis 15 mm, bevorzugt 8 mm, betragen. Erfindungsgemäß ist das Aufnahmeelement 5 aus einem Material der Traverse 1 herausgeformt. Insbesondere ist das Aufnahmeelement 5 durch ein Pressen und Stanzen eines ersten Werkzeuges, welches an einer gegenüber der Seitenfläche 4 liegenden weiteren Seitenfläche der Traverse 1 platziert wird, erzeugt. Das erste Werkzeug kann insbesondere in einer Richtung, die senkrecht zu der Längsachse 3 verläuft, durch die Traverse 1 hindurchgepresst bzw. gestanzt werden, um das Aufnahmeelement 5 aus dem Material der Traverse 1 herauszuformen.

Fig. 3 zeigt die Traverse 1 in einer projizierten Ansicht in einer in Fig. 2 gezeigten Blickrichtung A-A. Bei der in Fig. 2 und 3 dargestellten Variante weist das Aufnahmeelement 5 eine in zur Längsachse 3 im Wesentlichen senkrecht verlaufende und nach oben offene Aussparung 9 auf. Eine Richtung 30, die exakt senkrecht zu der Längsachse ausgerichtet ist, ist in Fig. 3 dargestellt und verläuft vertikal im Raum, wenn das Regal 10 aufgestellt ist. Die nach oben offene Aussparung 9 dient zum Aufnehmen des Paneels 2 in der Richtung 30, wobei hierbei das Paneel 2 von oben nach unten in die Richtung 30 bewegt wird, um ein Ende des Paneels 2 in die Aussparung 9 zu setzen. Die im Wesentlichen in der Richtung 30 verlaufende Aussparung 9 kann, wie in Fig. 3 gezeigt, auch einen Winkel von etwa 10 Grad zu der Richtung 30 einnehmen.

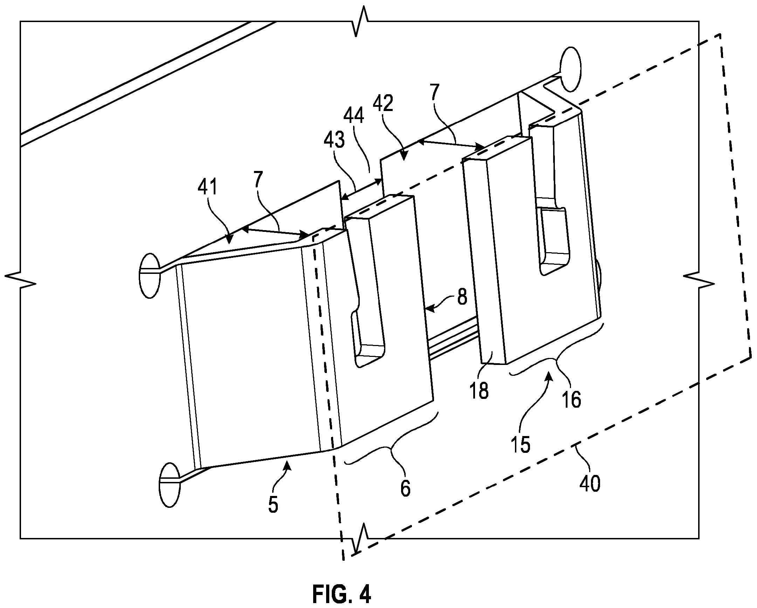

Bei der nach Fig. 2 und 3 gezeigten Variante der Traverse 1 sind an der Seitenfläche 4 zwei Aufnahmeelemente, nämlich das Aufnahmeelement 5 und ein weiteres Aufnahmeelement 15, angeordnet. Das weitere Aufnahmeelement 15 weist analog zu dem Aufnahmeelement 5 ein in Fig. 4 gezeigtes frei stehendes Ende 18 auf. Ebenso weist das weitere Aufnahmeelement 15 einen parallel zu der Seitenfläche 4 verlaufenden Abschnitt 16 auf, der den ersten Abstand 7 zu der Seitenfläche 4 aufweist. Analog erstreckt sich der Abschnitt 16 bis zu dem freien Ende 18.

Die frei stehenden Enden 8, 18 der beiden Aufnahmeelemente 5, 15 liegen in einer zweiten Ebene 40, die parallel zu der Seitenfläche verläuft und den ersten Abstand 7 zu der Seitenfläche hat. Innerhalb der zweiten Ebene 40 weisen die frei stehenden Enden 8, 18 einen zweiten Abstand 32, wie in Fig. 3 gezeigt, auf. Der zweite Abstand 32 kann beispielsweise 1 bis 2 cm betragen.

Fig. 3 zeigt weiterhin, dass das weitere Aufnahmeelement 15 ebenfalls eine Aussparung 19 aufweist. Bei der in den Figuren dargestellten Variante der Aufnahmeelemente 5, 15 sind zueinander gewandte Kanten 11, 21 der Aussparungen 9, 19 der beiden Aufnahmeelemente 5, 15 zueinander geneigt. Dies wird durch einen Winkel 31 anschaulich dargestellt, dessen erster Schenkel 31a in Form einer Verlängerung einer ersten Kante 11 der Aussparung 9 und dessen zweiter Schenkel 31b in Form einer Verlängerung einer ersten Kante 21 der Aussparung 19 ausgebildet ist. Der Winkel 31 kann beispielsweise 20 bis 25 Grad, vorteilhafterweise 23 Grad, betragen.

Wie in den Figuren gezeigt, weist die Traverse 1 einen in Fig. 4 gezeigten Durchbruch 41 auf, der durch das Herausformen des Aufnahmeelementes 5 aus dem Material der Traverse 1 gebildet ist. Weiterhin weist die Traverse 1 bei den in Figuren gezeigten Varianten einen zweiten Durchbruch 42 auf, der durch ein Herausformen des weiteren Aufnahmeelementes 15 aus dem Material der Traverse 1 gebildet ist. Der erste Durchbruch 41 weist zu dem zweiten Durchbruch 42 einen dritten Abstand 43 auf. Durch den dritten Abstand 43 ist ein Steg 44 gebildet, der sich zwischen den Durchbrüchen 41, 42 in vertikaler Richtung parallel zu der zweiten Ebene 40 erstreckt.

Fig. 3 zeigt weiterhin, dass die Traverse 1 zumindest einen ersten Eckbereich 34 aufweist, an welchem eine erste Seitenkante 35 des Aufnahmeelementes 5 an die Seitenfläche 4 unmittelbar angrenzt. Insbesondere ist das Aufnahmeelement 5 ab dem Eckbereich 34 aus dem Material der Traverse 1 herausgeformt. Die Traverse 1 weist im Eckbereich 34 eine Entlastungsaussparung 36 auf. Die Entlastungsaussparung 36 kann als zusätzliche Aussparung zusätzlich zu dem ersten Durchbruch 41 verstanden werden.

Die Entlastungsaussparung 36 hat vorteilhafterweise eine runde Form und kann als eine Bohrung ausgebildet sein. Die Bohrung hat vorteilhafterweise einen Durchmesser von mehr als 5 mm. Insbesondere weist die Entlastungsaussparung 36 in einem Querschnitt, der sich parallel zu der Seitenwand 4 in dem Material der Traverse 1 erstreckt, eine Löffelform mit einem länglichen Schlitz 37 und einem an den Schlitz 37 angrenzenden runden Ende 38 auf. Der Schlitz 37 grenzt an den Eckbereich 34 an und erstreckt sich von dem frei stehenden Ende 8 weg.

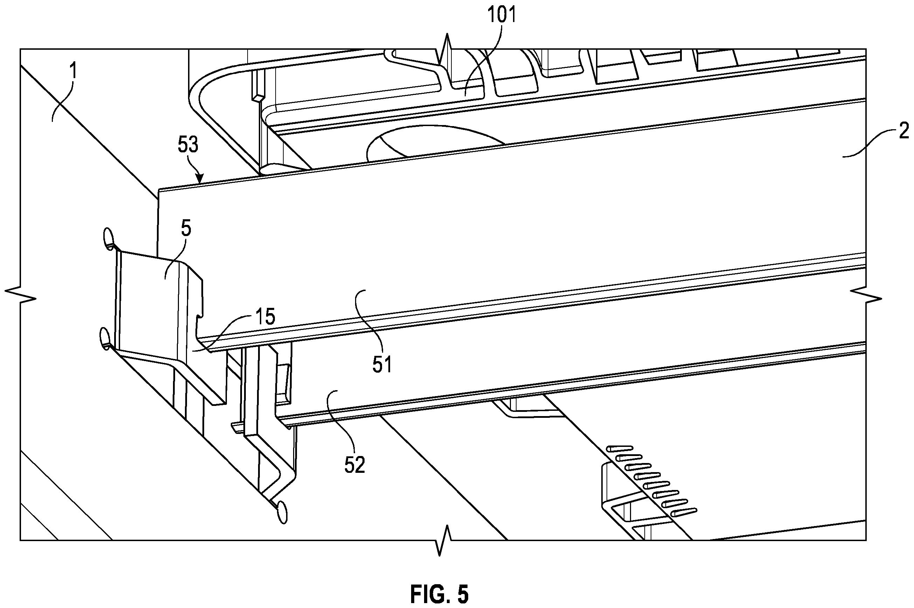

Fig. 5 zeigt eine mögliche Ausgestaltung des Paneels 2 in einer perspektivischen Ansicht von schräg unten. Bei dieser Ausgestaltung ist das Paneel 2 in Form eines U-förmigen Profils ausgebildet. Das U-förmige Profil bildet sich hierbei durch einen ersten Schenkel 51 und einen zweiten Schenkel 52 des Paneels 2, die durch einen in Fig. 5 nicht gezeigten waagerechten Schenkel des Paneels 2 miteinander verbunden sind. Der erste und der zweite Schenkel 51, 52 laufen parallel zueinander von oben nach unten, wenn das Paneel 2 an der Traverse 1 befestigt ist. Weiterhin zeigt Fig. 5 einen Behälter 101 der in Fig. 1 gezeigten Behälter 100 von unten. Der Behälter 101 liegt auf einer Oberseite des Paneels 2 auf.

Um ein erstes Ende 53 des Paneels 2 an der Traverse 1 zu befestigen, wird das erste Ende 53 von oben nach unten in Richtung 30 in die beiden Aufnahmeelemente 5, 15 eingeschoben. Hierbei dienen die Kanten 11, 21 der beiden Aufnahmeelemente 5, 15 als Führungskanten. Dadurch, dass die beiden Kanten 11, 21 zueinander geneigt sind, werden die beiden Schenkel 51, 52 bei einer Bewegung des ersten Endes 53 von oben nach unten in die Aufnahmeelemente 5, 15 zusammengedrückt. Hierdurch entsteht eine Kraft, die die beiden Schenkel 51, 52 auseinanderdrückt, nachdem eine jeweilige Öffnung des ersten Schenkels 51 und des zweiten Schenkels 52 eine Rastnase 61 des Aufnahmeelementes 5 beziehungsweise eine Rastnase 62 des weiteren Aufnahmeelementes 15 passiert haben. Ein Auseinanderdrücken der beiden Schenkel 51, 52 bewirkt, dass die Schenkel 51, 52 in ihre Ursprungsform zurückspringen, wodurch ein sicherer Sitz des ersten Endes 53 des Paneels 2 in den Aufnahmeelementen 5, 15 gewährleistet wird. Die Rastnasen 61, 62 ergeben sich durch einen entsprechenden Verlauf der Kanten 11, 21 der Aufnahmeelemente 5, 15.

Dadurch, dass die frei stehenden Enden 8, 18 den zweiten Abstand 32 zueinander aufweisen und insbesondere frei im Raum in Bezug zu der Seitenfläche 4 stehen, ergibt sich beim Einsetzen des Paneels 2 in die Aufnahmeelemente 5, 15 ein folgendes Zusammenwirken zwischen den Aufnahmeelementen 5, 15 und den Schenkeln 51, 52 des Paneels 2. Dadurch dass die Enden 8, 18 frei stehen und nicht wie bei einer U-förmigen Halterung miteinander verbunden sind, wie es beispielsweise in der oben genannten US 5310066A beschrieben ist, können sich die Aufnahmeelemente 5, 15 innerhalb der zweiten Ebene 40 beim Hinunterdrücken der Schenkel 51, 52 entlang der Kanten 11, 21 voneinander weg bewegen. Dies ermöglicht es, dass die beiden Schenkel 51, 52 nicht so stark zusammengepresst werden müssen, um ein Einrasten der Öffnungen der Schenkel 51, 52 in die Rastnasen 61, 62 zu bewirken. Dadurch ist es möglich, das Paneel 2 steifer auszugestalten, wodurch eine höhere Traglast des Paneels 2 ermöglicht wird.

Beispielsweise kann eine Wandstärke der Schenkel 51, 52, und insbesondere des waagerechten Schenkels, höher dimensioniert werden. Wird hingegen das Paneel 2 nicht stärker dimensioniert, so ergibt sich durch ein Auseinanderbewegen der frei stehenden Enden 8, 18 ein leichteres Einsetzen des ersten Endes 53 in die Aufnahmeelemente 5, 15. Dies ist dadurch begründet, dass eine gemeinsame Federsteifigkeit, die bei dem Hinunterdrücken der Schenkel 51, 52 entlang der Kanten 11, 21 wirkt und sich aus einem elastischen Verhalten der Schenkel 51, 52 und einem elastischen Verhalten der Aufnahmeelemente 5, 15 zusammen ergibt, niedriger als eine Federsteifigkeit ist, die sich allein aus dem elastischen Verhalten der beiden Schenkel 51, 52 ergibt. Ein leichteres Einsetzen des Paneels 2 in die Aufnahmeelemente 5, 15 erleichtert selbstverständlich das Montieren der Paneele des Regals 10.

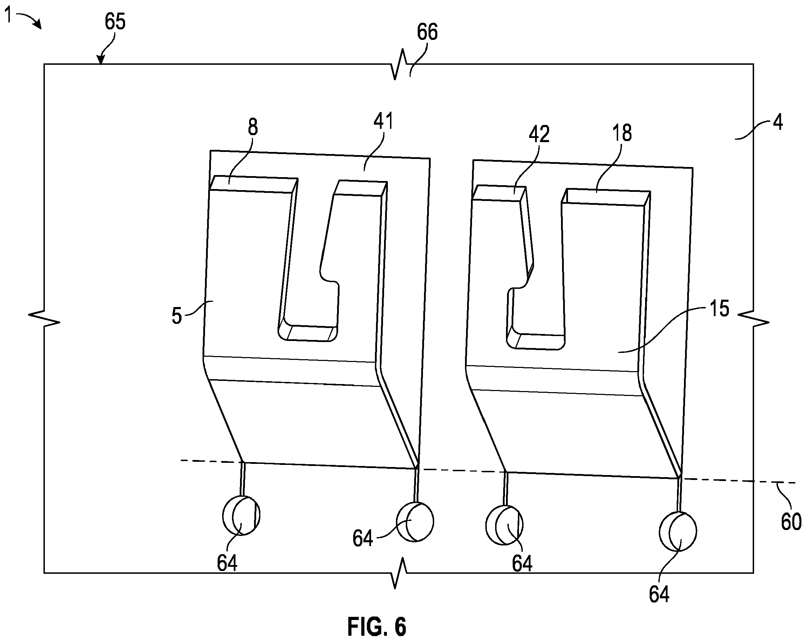

Fig. 6 zeigt eine weitere Variante der Traverse 1, bei welcher die frei stehenden Enden 8, 18 der beiden Aufnahmeelemente 5, 15 nicht wie in den Fig. 2 bis 5 gezeigt, zueinander gewandt sind, sondern in eine gleiche Richtung, beispielsweise nach oben, wie in Fig. 6 dargestellt, zeigen. Die beiden Durchbrüche 41, 42 sind wie bei der in den Fig. 1 bis 5 dargestellten Variante mit einem Abstand zueinander angeordnet. Jedoch sind die beiden Aufnahmeelemente 5, 15 derart aus dem Material der Traverse 1 herausgeformt, dass sich eine gemeinsame Höhenlinie 60 ergibt, ab welcher die beiden Aufnahmeelemente 5, 15 aus dem Material der Traverse 1 geformt sind. Dies kann beispielsweise den Vorteil haben, dass mehrere Entlastungsbohrungen 64 leichter hergestellt werden können, da diese nebeneinander auf einer selben Höhe, die parallel zu der gemeinsamen Höhe 60 verläuft, liegen.

Des Weiteren haben bei der in Fig. 6 dargestellten Variante die Entlastungsbohrungen 64 einen größeren Abstand zu einer Oberkante 65 der Traverse 1. Dies kann unter Umständen eine höhere Stabilität eines Gurtes 66, der sich beim Herausformen der Aufnahmeelemente 5, 15 im oberen Bereich der Traverse 1 ergibt, bewirken. Auch kann eine eventuelle Schwächung des Materials der Traverse 1, die beim Herausformen der Aufnahmeelemente 5, 15 entstehen kann, in einen Bereich verlagert werden, der einen größeren Abstand zu dem Gurt 66 hat als bei der in den Fig. 1 bis 5 dargestellten Variante der Traverse 1.

Des Weiteren ergeben sich bei der in Fig. 6 dargestellten Variante, gerade bei höheren Lasten durch Paneel 2, bessere Lastabtragungen in die Traverse 1, da keine Scherkräfte auftreten, sondern eher Druckkräfte im Bereich eines Übergangs zwischen der Aufnahmeelemente 5,15 und der Traverse 1.

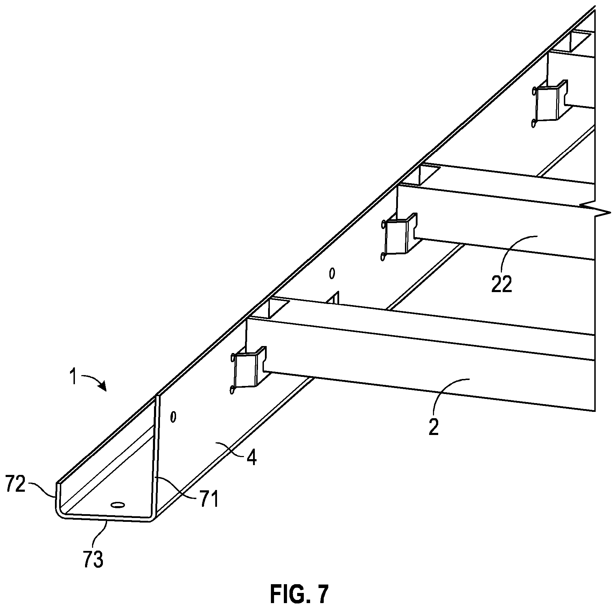

Fig. 7 zeigt eine mögliche Ausgestaltung der Traverse 1 in Form eines asymmetrischen U-Profils. Das U-Profil wird hierbei durch einen ersten Schenkel 71 und einen zweiten Schenkel 72, der kürzer als der erste Schenkel 71 ausgebildet ist, und einen waagerechten Schenkel 73 gebildet. Der waagerechte Schenkel 73 verbindet die beiden Schenkel 71, 72 miteinander. Der erste Schenkel 71 weist die in den Fig. 1 bis 6 dargestellte Seitenfläche 4 und eine in Fig. 7 verdeckte weitere Seitenfläche auf. Fig. 7 zeigt, wie an der Traverse 1 nicht nur das Paneel 2, sondern ein weiteres Paneel 22 an der Traverse 1 befestigt ist. Hierbei ist das weitere Paneel 22 in analoger Weise zu dem Paneel 2 mit Hilfe von zwei weiteren Aufnahmeelementen, die analog zu den Aufnahmeelementen 5, 15 ausgebildet sind, an der Traverse 1 befestigt.

Der waagerechte Schenkel 73 kann insbesondere eine Auflagefläche für Räder eines Regalbedienfahrzeugs, wie z.B. ein Regalshuttle, bilden. Ein seitliches Verrutschen der Räder wird hierbei durch die beiden Schenkel 71, 72 verhindert, sodass das U-Profil eine Fahrrinne für das Regalbedienfahrzeug ausbildet. Hierbei trägt die Traverse 1 zumindest einen Teil eines Gewichtes des Regalbedienfahrzeugs. Dadurch, dass das Paneel 2 mithilfe der Aufnahmeelemente 5, 15 abgestützt ist und nicht durch einen hypothetischen von der Oberkante 65 nach unten verlaufenden Schlitz der Traverse 1 aufgenommen ist, ist die Traverse 1 in einem oberen Bereich des ersten Schenkels 71, insbesondere im Bereich des Gurtes 66, stabiler ausgebildet. Dadurch können deutliche Materialeinsparungen bei gleichbleibenden Lasten, die von dem Regalshuttle oder von einem Behälter auf das Paneel 2 wirken, in Form einer geringeren Materialstärke der Traverse 1 realisiert werden.

### Bezugszeichenliste

- 1: Traverse
- 2, 22: Paneel
- 3: Längsachse der Traverse
- 4: Seitenfläche der Traverse
- 5,15: Aufnahmeelement
- 6,16: Abschnitt des Aufnahmeelements
- 7: Erster Abstand
- 8,18: Freistehendes Ende des Aufnahmeelements
- 9,19: Aussparung
- 10: Regal
- 11,21: Kante
- 20: Erste Ebene
- 30: Richtung
- 31: Winkel
- 31a: Erster Schenkel des Winkels
- 31b: Zweiter Schenkel des Winkels
- 32: Zweiter Abstand
- 34: Eckbereich
- 35: Seitenkante des Aufnahmeelements
- 36: Entlastungsaussparung
- 37: Schlitz
- 38: Rundes Ende
- 40: Zweite Ebene
- 41,42: Durchbruch
- 43: Dritter Abstand
- 44: Steg
- 51: Erster Schenkel des Paneels
- 52: Zweiter Schenkel des Paneels
- 53: Erstes Ende des Paneels
- 60: Gemeinsame Höhenlinie
- 61,62: Rastnase
- 64: Entlastungsbohrungen
- 65: Oberkante der Traverse
- 66: Gurt
- 71: Erster Schenkel des U-Profils
- 72: Zweiter Schenkel des U-Profils
- 73: Waagerechter Schenkel des U-Profils
- 100,101: Behälter
- 102: Regalstützen

## Patentansprüche

1. Traverse (1) für ein Regal (10) zum Tragen zumindest eines Paneels (2) des Regals (10), wobei die Traverse (1) eine zur Längsachse (3) der Traverse (1) parallel verlaufende Seitenfläche (4) und zumindest ein Aufnahmeelement (5) zum Befestigen des Paneels (2) aufweist und das Aufnahmeelement (5) an der Seitenfläche (4) angeordnet ist und einen Abschnitt (6) aufweist, der einen Abstand (7) zu der Seitenfläche (4) aufweist und sich bis zu einem frei stehenden Ende (8) des Aufnahmeelementes (5) erstreckt, und das Aufnahmeelement (5) aus einem Material der Traverse (1) herausgeformt ist.

2. Traverse (1) nach Anspruch 1, wobei das Aufnahmeelement (5) eine in zur Längsachse (3) im Wesentlichen vertikale Richtung verlaufende und nach oben offene Aussparung (9) zum Aufnehmen des Paneels (2) in der vertikalen Richtung aufweist.

3. Traverse (1) nach Anspruch 1 oder 2, wobei an der Seitenfläche (4) zwei der Aufnahmeelemente (5, 15) angeordnet sind, wobei die frei stehenden Enden (8, 18) der beiden Aufnahmeelemente (5, 15) in einer Ebene (40) liegen, die parallel zu der Seitenfläche (4) verläuft, und innerhalb der Ebene (40) einen Abstand (32) zueinander aufweisen.

4. Traverse (1) nach Anspruch 2 und 3, wobei die beiden Aufnahmeelemente (5, 15) jeweils die Aussparung (9, 19) aufweisen, wobei zueinander gewandte Kanten (11, 21) der Aussparungen (9, 19) der beiden Aufnahmeelemente (5, 15) zueinander geneigt sind.

5. Traverse (1) nach einem der vorigen Ansprüche, wobei die Traverse (1) einen Durchbruch (41) aufweist, der durch das Herausformen des Aufnahmeelementes (5) aus dem Material der Traverse (1) gebildet ist.

6. Traverse (1) nach Anspruch 5, wobei an der Seitenfläche (4) zwei der Aufnahmeelemente (5, 15) angeordnet sind, wobei die Traverse (1) zwei der Durchbrüche (41, 42) aufweist, wobei die beiden Durchbrüche (41, 42) einen Abstand (43) zueinander aufweisen, sodass ein Steg (44) zwischen den Durchbrüchen (41, 42) gebildet ist.

7. Traverse (1) nach einem der vorigen Ansprüche, ferner mit zumindest einem Eckbereich (34), an welchem eine Seitenkante (35) des Aufnahmeelementes (5) an die Seitenfläche (4) unmittelbar angrenzt und ab welchem das Aufnahmeelement (5) aus dem Material der Traverse (1) herausgeformt ist, wobei die Traverse (1) im Eckbereich (34) zusätzlich zu der aus der Herausformung resultierenden Aussparung der Seitenfläche (4) eine Entlastungsaussparung (36) aufweist.

8. Traverse (1) nach Anspruch 7, wobei die Entlastungsaussparung (36) eine runde Form aufweist oder
im Querschnitt eine Löffelform mit einem länglichen Schlitz (37) und einem an den Schlitz (37) angrenzenden runden Ende (38) aufweist, wobei der Schlitz (37) an den Eckbereich (34) angrenzt und sich von dem Eckbereich (34) und dem freistehenden Ende (8) weg erstreckt.

9. Regal (10) mit zumindest einer Traverse (1) und zumindest einem Paneel, wobei die Traverse (1) eine zur Längsachse (3) der Traverse (1) parallel verlaufende Seitenfläche (4) und zumindest ein Aufnahmeelement (5) zum Befestigen des Paneels (2) aufweist und das Aufnahmeelement (5) an der Seitenfläche (4) angeordnet ist und einen Abschnitt (6) aufweist, der einen Abstand (7) zu der Seitenfläche (4) aufweist und sich bis zu einem frei stehenden Ende (8) des Aufnahmeelementes (5) erstreckt, und das Aufnahmeelement (5) aus einem Material der Traverse (1) herausgeformt ist.
